Europäisches Patentamt

(19) European Patent Office

Office européen des brevets

(11) Publication number: **0 263 982**
**B1**

(12) EUROPEAN PATENT SPECIFICATION

(45) Date of publication of the patent specification:
12.12.90

(51) Int. Cl.⁵: **B23B 31/20**

(21) Application number: **87113328.6**

(22) Date of filing: **11.09.87**

(54) Collet Chuck.

(30) Priority: **12.09.86 JP 141079/86**
**07.10.86 JP 154148/86**

(43) Date of publication of application:
**20.04.88 Bulletin 88/16**

(45) Publication of the grant of the patent:
**12.12.90 Bulletin 90/50**

(84) Designated Contracting States:
**CH DE FR GB IT LI SE**

(56) References cited:
**CH-A- 557 211**
**DE-A- 2 707 857**
**DE-C- 489 785**
**DE-C- 900 030**
**US-A- 1 973 942**
**US-A- 3 451 686**

**DE - B - 0 1283lb/49a (ORTLIEB) * claims 1, 3 ***

(73) Proprietor: **Daishowa Seiki Co., Ltd., 3-39,**
**Nishiishikiricho 3-chome, Higashiosaka-shi**
**Osaka-fu(JP)**

(72) Inventor: **Kubo, Haruaki, 3-39, Nishiishikiricho 3-chome,**
**Higashiosaka-shi Osaka-fu(JP)**

(74) Representative: **Füchsle, Klaus, Dipl.-Ing. et al,**
**Hoffmann . Eitle & Partner Patentanwälte**
**Arabellastrasse 4, D-8000 München 81(DE)**

## Description

The present invention relates to a collet chuck for mounting a tool such as drill, end mill and like to a rotary spindle in various kinds of machine tools.

Related Background Art

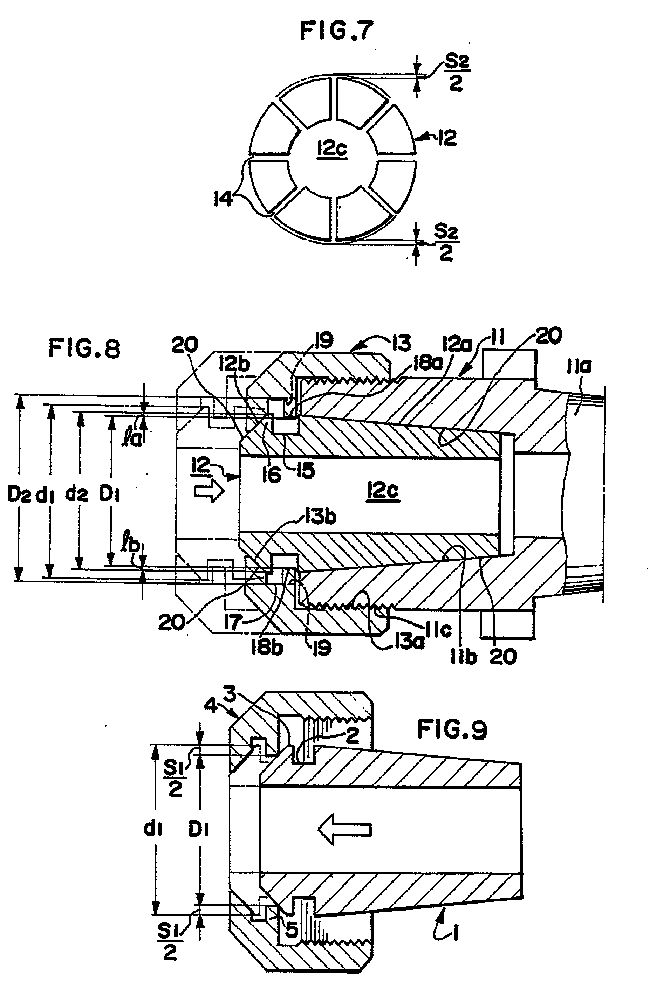

The collet chuck as conventionally used comprises a main body of a chuck having a taper hole at its top end part or in other words its tool receiving end, a collet having an external taper surface which is detachably fitted into the taper hole, and a fastening nut which is fitted around the collet and, at the same time, is detachably screwed on the main body of the chuck to reduce the diameter of the collet by forcing it into said taper hole. The collet is rendered capable of being reduced in diameter by means of axially expanding slots which cut the surface of the collet alternately from both the sides including its top end side and its rear end side, and a fastening operation of the fastening nut allows the collet not only to be fitted into the taper hole in a pressable manner but also to be reduced in diameter, thereby fastening and fixing the tool which is fitted into the collet in an insertional manner. As the prior art of Fig. 9 illustrates, an annular groove 2 is provided around the external periphery on the top end side of the collet 1 and an outward flange 3 is formed on the top end part of the collet 1, an inward flange 5 is formed around the internal periphery of the fastening nut 4, and, consequently, such a holding of the inward flange 5 into the annular groove 2, as shown by a dashed line of the same figure, permits the collet 1 and the fastening nut 4 to be detachably connected to each other.

The collet 1 is fitted into the taper hole of the main body of the chuck and the pressing or drawing action of the fastening nut 4 causes the collet 1 to be mounted to or detached from the taper hole.

Since the tools capable of being mounted by way of the collet into the main body of the chuck are limited to those whose shaft diameter can be accepted by the collet and gripped, difficulties arise of tools to be mounted into the main body of the chuck have a marked difference in the diameter of their shafts. There is then the necessity of making a replacement of a collet by another whose internal diameter corresponds to the change of tool. In that case, in order to mount or detach the collet 1 to or from the fastening nut 4, the prior art of Fig. 9 requires the collet 1 to be entirely reduced in its diameter at least to the extent of the difference in diameter S1 between the maximum external diameter d1 of the outward flange and the internal diameter D1 of the inward flange 5. But, since there is the necessity of providing an area of engagement to be maintained between both the flanges 3 & 5, even in the case where the diameter of the collet 1 is minimised, so that the collet 1 may be drawn out from the main body of the chuck, while the collet 1 is being held by the fastening nut 4 in a pulling manner, this results in the magnitude of the difference in diameters S1 (see Fig. 9) being considerable and the mounting or detaching of the collet 1 to or from the fastening nut 4 may then need an extremely large amount force for the reduction of the diameter of the collet to take place so that there is a difficulty in replacing a collet in the process of the exchange between the tools.

A further prior art is that disclosed in DE C 900 030 in which the collet chuck comprises a main body having a taper hole at its tool receiving end. The collet has an external taper surface; is capable of being reduced in diameter and is detachably fitted into said taper hole. A fastening nut is detachably screwed onto the main body to reduce the diameter of the collet by forcing it into the taper hole. The collet has at its tool receiving end a radially outwardly directed flange coaxial with the central axis of the collet. In one embodiment this outwardly directed flange is cut-away on two diametrically opposed sides to provide two flat faces and the nut is formed on its inner surface with two inwardly directed diametrically opposed flat sunfaced flanges. The spacing between the two inwardly directed flanges of the nut is sufficient for the two flat surfaces in the flange on the collet to pass therebetween. Thereafter by rotating the collet relative to the nut by 90° the collet becomes locked with the nut in bayonet fashion. The present invention, which has the purposes listed hereinafter, is as defined in the accompanying Claim 1 which has been divided into a two-part form based on the assumption that DE C 900 030 is the nearest prior art.

Accordingly, the purpose of the present invention is to provide a collet chuck capable of mounting and detaching the collet to and from the fastening nut by a small force.

The further purpose of the present invention is to provide a collet chuck in which a high speed rotation of the spindle during the cutting work does not give rise to vibration of a cutting blade, an entire balance of its shape is kept, and its suitability for precision machining is enhanced.

The still further purpose of the present invention is to provide a collet chuck that is easy to manufacture, is simple in construction and is not costly with the afore-mentioned purposes attained.

Fig. 1 is a longitudinal sectional view of the first embodiment according to the present invention wherein the fastening nut is in a state of being relaxed;

Fig. 2 is a sectional view taken on the line II-II of Fig.1;

Fig. 3 is an end view taken from the top end side of the collet;

Fig. 4 is an end view taken from the base end side of the fastening nut;

Fig. 5 is a longitudinal sectional view of the state of maximizing the fastening force of the fastening nut;

Fig. 6 is a longitudinal sectional view illustrating an operation of connecting the collet and the fastening nut to each other;

Fig. 7 is a typical sectional view illustrating a movement of the collet made at the afore-mentioned connecting operation;

Fg. 8 is a longitudinal sectional view of a further embodiment according to the present invention; and

Fig. 9 is a longitudinal sectional view of the collet chuck according to the prior art.

Description of Embodiments of the Invention.

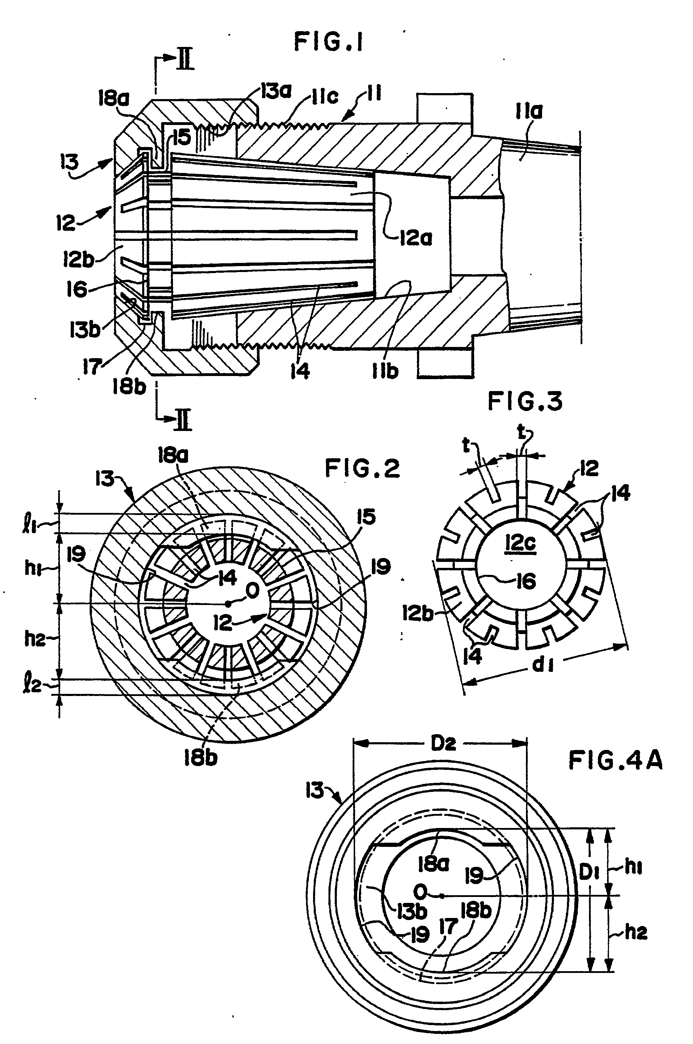

Referring to Fig. 1, the numeral 11 designates the main body of the chuck having not only a taper shank 11a at its rear end part but also the taper hole 11b tapering in dimension toward the rear area thereof from the inside of its top end or tool receiving end. The numeral 12 designates the collet having the taper surface 12a tapering in dimension toward the rear area thereof around its external periphery. The numeral 13 designates the fastening nut which is detachably connected to the collet 12 and, at the same time, is detachably screwed on the main body of the chuck 11.

The collet 12, approximately cylindrical shaped, has a hole or bore 12c into which the tool is fitted; the hole 12c being coaxial with a virtual central axis of the collet 12, the expanding slots 14, 14, & 14, ... which cut the surface of the collet 12 are formed alternately from both ends, including its top end and its rear end, with 8 lines of slots being spaced around its circumference. An annular groove 15 is provided around the external periphery of the collet near to its top end. The collet 12 has an outward flange 16 coaxial with the virtual central axis of the collet 12 formed at the top end part of the collet 12. A taper surface 12b whose inclination takes a direction opposite to that of the taper surface 12a is formed at the external periphery surface of the top end part of the collet 12.

The fastening nut 13 has a female screw 13a threaded around its internal periphery near to the base end so that the female screw 13a is screwed with a male screw 11c which is threaded around the external periphery near to the top end of the main body of the chuck 11. The internal periphery near to the top end of the fastening nut 13 is formed with a taper surface 13b whose angle of inclination is identical to that of the taper surface 12b near to the top end of the collet 12.

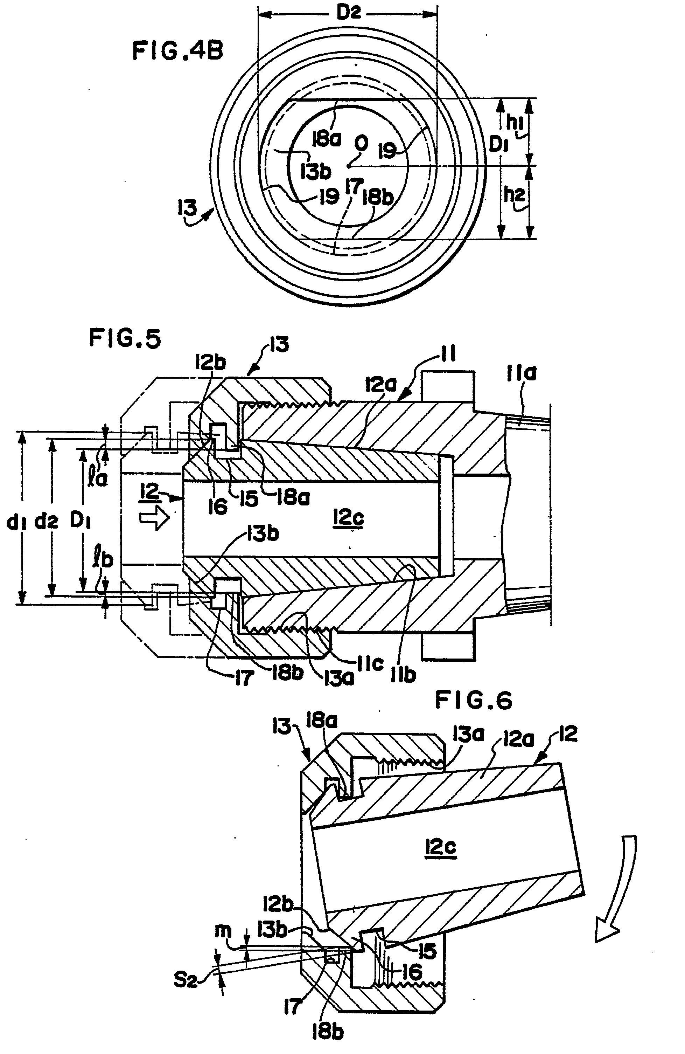

An annular groove 17, coaxial with the virtual central axis of the nut 13, is formed in the nut behind the taper surface 13b, and a pair of inward flanges 18a and 18b are provided at positions respectively opposite to each other in a radial direction and adjoining to the annular groove 17. These inward flanges 18a and 18b are provided such that the internal diameter $D1$ between them (Fig. 5) is smaller than the external diameter $d2$ of the outward flange 16 (Fig. 5) which is established when the mounting of the collet 12 is made with its diameter being shrunk in the under-mentioned manner. The distances from the axial center O to the inward flanges 18a and 18b are different from each other: As illustrated in Fig. 2, 4-A, and 4-B, one of the distances is equal to $h1$ and another thereof is equal to $h2$, in other words, the projecting extents of both the flanges 18a and 18b defined as $l1$ and $l2$ are different from each other as illustrated in Fig. 2. The internal peripheral sections 19, 19 (cutout sections) excluding both the flanges 18a and 18b of the nut 13 have an internal diameter $D2$ between them (Fig. 4-A and 4-B) that is larger than the external diameter $d1$ of the outward flange 16 when the diameter of the collet 12 is increased (i.e) when the collet 12 is removed from the main body of the chuck 11.)

The collet 12 and the fastening nut 13 are connected to each other under conditions wherein while the inward flanges 18a and 18b of the fastening nut 13 are held in the annular groove 15 of the collet 12, the outward flange 16 of the collet 12 is held into the annular groove 17 of the nut 13 at the same time. Subsequently, by fitting the taper surface 12a of the collet 12 into the taper hole 11b of the main body of the chuck 11 and then fastening the nut 13 onto the main body of the chuck 11, the collet is caused 12 to enter in a compressible manner into the taper hole 11a so that the diameter of the collet is reduced by the consequential decrease of the width t of the expanding slots. For this reason, when the afore-mentioned fastening operation follows the fitting of the shaft of a tool into the hole or bore 12c, the consequential reduction of the diameter of the hole into which the tool is fitted allows the tool to be fastened and fixed.

The internal diameter $D1$ between the pair of inwards flanges 18a and 18b is smaller than the external diameter of the outward flange 16 of the collet 12 under the state where the nut 13 is maximumly fastened as shown by a solid line of Fig. 5, i.e. the minimum external diameter $d2$. Relaxing of the nut 13 from the afore-mentioned maximum fastening state in which the corresponding dimensional relation, $D1 < d2$, gives rise to $la$ and $lb$ of margins to be held between both the flanges 16, 18a, and 18b, followed by the axial movement of the collet 12, permits the collet 12 to be automatically pulled out from the taper hole 11b. The interval between opposite cutout sections 19 and 19, the internal peripheral sections excluding both the flanges 18a and 18b of the fastening nut 13, i.e. the internal diameter $D2$ (Fig. 4A and 4B) between the cutout sections 19 and 19 is larger than the maximum external diameter $d1$ of the outward flange 16 of the collet 12 under the state prior to fastening of the nut 13 as shown by the dashed line of Figs. 1 and 5. Namely, these dimensional relations are represented by $D2 > d1 > d2 > D1$ and the resulting definition is that even when the outward flange 16 is at the minimum external diameter $d2$, the collet 12 does not reach its limiting smallest diameter with intervals left between the expanding slots 14.

In the collet chuck of the afore-mentioned construction, as shown in Fig. 6, mounting and detaching of the collet 12 to and from the fastening nut 13 can be easily done by carrying out the fitting in such a manner that the collet 12 is twisted from or to a position inclined from the virtual central axis into the nut 13 as shown in Fig. 6. Namely, because of $D2 > d1$, in order to make connection, an utilization of the space between the cutout sections 19 and 19 may enable almost all the area of the outward flange 16 to be inserted into the side of the annular groove 17 of the fastening nut 13, while the collet 12 is in a slightly inclining posture as shown in Fig. 6. Subsequently, upon holding the outward flange 16 in a fitting manner into one 18a of a pair of flanges 18a and 18b whose projecting amount is larger than that of another 18b, there takes place a surplus space the length of which is m between the latter inward flange 18b whose projecting amount is comparatively smaller and the outward flange 16, in response of which such a forward and backward rotation of the collet 12 as shown by arrow of the same figure provides a simple operation for reducing the diameter of the collet 12 to the extent of a convertible value S2 in a radial direction of the collet 12 to equal m with the resulting possibility of fully housing the entire outward flange 16 in the annular groove 17, thereby completing the connection. In that case, the amount of reduction in diameter S2 is extremely smaller than S1 that is necessary for making the pertinent connection with the construction of Fig. 9 as well as, as shown in Fig. 7, only 4 pieces in total, consisting of two groups of two pieces opposite to each other in a radial direction among 8 pieces located at the top end of the collet 12, have to make a displacement of only S2 / 2, so that it is possible to ensure that only an extremely small amount of force is needed for the mounting and detaching operation to be carried out.

Referring to Fig. 8, which illustrates a further embodiment according to the present invention, the structure of this embodiment is approximately identical to those of the afore-mentioned embodiment.

Namely, the collet 12 and the fastening nut 13 are connected to each other under the state where while the inward flange 18 of the fastening nut 13 is held in the annular groove 15 of the collet 12 with the help of the cutout sections 19 and 19, the outward flange 16 of the collet 12 is held in the annular groove 17 of the fastening nut 13 at the same time. By fitting the taper surface 12a of the collet 12 into the taper hole 11b of the main body of the chuck 11 and then fastening the nut 13 onto the main body of the chuck 11, the collet 12 is caused to enter in a compressible manner into the taper hole 11b, thereby fastening and fixing the cutting tool in the hole 12c into which the tool is inserted. As in the afore-mentioned embodiment the relation by which the inward flanges 18a and 18b and the cutout sections 19 and 19 of the fastening nut 13 and the outward flange 16 of the collet 12 are related to one another is represented by D2 > d1 > d2 > D1.

The features of the third embodiment lie in a forming of ceramic film 20 on almost the entire surface of the collet 12 including the taper surface 12b on the top end part, the bottom face and both the inner side faces of the annular recessed groove 15, the taper surface 12a which is fitted into the taper hole 11b of the main body of the chuck 11, and both the end faces of the collet as well as on the sections including the taper surface 13b of the fastening nut 13, and the inner peripheral surface and both the side faces of the inward flanges 18a and 18b. The ceramic film 20 comprises an extremely thin film on nitride such as TiN or TiC. In the case of preparing such a ceramic film, in general, a vaporing method in which the ceramic film is formed out of the vapor phase is used, the vaporing method including Chemical Vapor Deposition (CVD) depending on the chemical reaction and Physical Vapor Deposition (PVD) depending on the Physical technique such as vaporisation and the like. In the present embodiment, the latter PVD, particularly a vacuum vaporisation, may be preferably employed in preparing the ceramic film 20. Furthermore, the ceramic film comprising the thin film of nitride such as TiN and the like is of ultra-hardness, being of superiority in wear resistance and heat resistance.

The forming of the ceramic film on the surfaces of the collet and the fastening nut enables not only the wear resistance and the heat resistance of the collet chuck to be enhanced but also the nut to be smoothly rotated with a reduced frictional resistance between the taper faces 12a and 13b being directly rubbed together.

**Claims**

1. A collet chuck comprising a main body (11) having a taper hole (11b) at its tool receiving end; a collet (12) capable of being reduced in diameter, said collet having an external taper surface (12a) which is detachably fitted into said taper hole (11b); a fastening nut (13) detachably connected to said collet (12) and capable of being detachably screwed onto the main body (11) of the chuck to reduce the diameter of said collet (12) by forcing it into said taper hole (11b); said collet (12) at its tool receiving end having an outwardly directed flange (16) coaxial with the central axis of the collet; said fastening nut (13) having on its internal periphery inwardly directed flanges (18a, 18b) and a pair of cutout sections (19, 19) formed at positions opposite to each other in a radial direction of said inwardly directed flanges (18a, 18b); the inwardly directed flange (18a, 18b) of the fastening nut (13) are of an internal diameter (D1) which is smaller than the minimum external diameter of said outwardly directed flange (16) of the collet (12) brought about by forcing the collet into said taper hole (11b); and the radial distance (D2) between said cutout sections (19, 19) is larger than the maximum external diameter (d1) of said outwardly directed flange (16) of the collet (12) when the collet is removed from the main body (11) of the chuck; characterized in that said pair of inwardly directed flanges (18a, 18b) are formed such that the radial distances (h1, h2) from the virtual axis center of the fastening nut to the inner end margins respectively of both said inwardly directed flanges are different from each other, i.e. the projecting amounts of both of said inwardly directed flanges respectively are different from each other.

2. A collet chuck as claimed in Claim 1 and wherein the internal diameter between the pair of inward flanges opposite to each other in the fastening nut is smaller than the external diameter of the outward flange of the collet when the nut has been screwed to a maximum on said main body of the chuck

3. A collet chuck as claimed in Claim 1 or Claim 2 and wherein a film of ceramic is formed on surfaces of either or both of said collet and the fastening nut.

**Patentansprüche**

1. Spannzangenfutter mit einem Hauptkörper (11), welcher an seinem das Werkzeug aufnehmenden Ende ein konisches Loch (11b) hat; mit einer Spannzange (12), deren Durchmesser verkleinert werden kann, wobei die Spannzange eine konische Außenfläche (12a) aufweist, welche lösbar in das konische Loch (11b) eingepaßt ist; mit einer Befestigungsmutter (13), welche lösbar mit der Spannzange (12) verbunden ist und welche lösbar auf den Hauptkörper (11) des Futters geschraubt werden kann, um den Durchmesser der Spannzange (12) zu verringern, indem sie in das konische Loch (11b) gepreßt wird; wobei die Spannzange (12) an ihrem das Werkzeug aufnehmenden Ende einen nach außen gerichteten Bund (16) hat, welcher koaxial zur Mittelachse der Spannzange angeordnet ist; die Befestigungsmutter (13) in ihrem inneren Bereich nach innen gerichtete Bünde (18a, 18b) und ein Paar Ausschnittsbereiche (19, 19) aufweist, welche in sich gegenüberliegenden Positionen in radialer Richtung der nach innen gerichteten Bünde (18a, 18b) ausgebildet sind; die nach innen gerichteten Bünde (18a, 18b) der Befestigungsmutter (13) einen Innendurchmesser (D1) haben, der geringer ist als der kleinste Außendurchmesser des nach außen gerichteten Bundes (16) der Spannzange (12), welcher durch Pressen der Spannzange in das konische Loch (11b) hervorgerufen wird; und wobei der radiale Abstand (D2) zwischen den Ausschnittsbereichen (19, 19) größer ist als der maximale Außendurchmesser (d1) des nach außen gerichteten Bundes (16) der Spannzange (12), wenn die Spannzange von dem Hauptkörper (11) des Futters abgenommen ist; dadurch gekennzeichnet, daß das Paar nach innen gerichteter Bünde (18a, 18b) derart ausgebildet ist, daß der radiale Abstand (h1, h2) von dem virtuellen Achsenmittelpunkt der Befestigungsmutter zu den jeweiligen inneren Rändern der beiden nach innen gerichteten Bünde unterschiedlich voneinander ist, d.h. die überstehenden Beträge der beiden jeweils nach innen ragenden Bünde sind unterschiedlich.

2. Spannzangenfutter nach Anspruch 1, dadurch gekennzeichnet, daß der Innendurchmesser zwischen dem Paar sich in der Befestigungsmutter gegenüberliegender nach innen ragender Bünde kleiner ist als der Außendurchmesser des nach außen ragenden Bundes der Spannzange, wenn die Mutter maximal auf den Hauptkörper der Spannzange geschraubt wurde.

3. Spannzangenfutter nach Anspruch 1 oder 2, dadurch gekennzeichnet, daß eine Schicht aus Keramik an einer oder beiden Oberflächen der Spannzange und der Befestigungsmutter ausgebildet ist.

**Revendications**

1. Mandrin à douille de serrage comprenant un corps principal (11) ayant une ouverture tronconique (11b) à son extrémité de réception des outils; une douille de serrage (12) capable d'être réduite en diamètre, cette douille ayant une surface extérieure tronconique (12a) qui est ajustée de manière détachable dans l'ouverture tronconique (11b), un écrou de fixation (13) réuni de manière détachable à la douille de serrage (12) et capable d'être vissé de manière détachable sur le corps principal (11) du mandrin pour réduire le diamètre de cette douille de serrage en la forçant dans l'ouverture tronconique (11b), la douille de serrage (12) ayant à son extrémité de réception des outils une bride (16) dirigée vers l'extérieur coaxiale avec l'axe central de la douille, l'écrou de fixation (13) ayant à sa périphérie intérieure des brides (18a, 18b) dirigées vers l'intérieur et une paire de parties découpées (19, 19) formées à des endroits opposés l'une à l'autre en sens radial auxdites brides (18a, 18b) dirigées vers l'intérieur, les brides (18a, 18b) dirigées vers l'intérieur de l'écrou de fixation (13) sont d'un diamètre intérieur (D1) qui est plus petit que le diamètre extérieur minimum de la bride (16) dirigée vers l'extérieur de la douille de serrage (12) mise à ce diamètre par enfoncement forcé de cette douille de serrage dans l'ouverture tronconique (11b), et la distance radiale (D2) entre les parties découpées (19, 19) est supérieure au diamètre extérieur maximum (d1) de la bride (16) dirigée vers l'extérieur de la douille de serrage (12) quand cette douille de serrage est enlevée du corps principal du mandrin, caractérisé en ce que les brides de la paire de brides (18a, 18b) dirigées vers l'intérieur sont formées de telle sorte que les distances radiales (h1, h2) entre le centre de l'axe virtuel de l'écrou de fixation et les bords extrêmes intérieurs des deux brides dirigées vers l'intérieur respectivement sont différentes l'une de l'autre, c'est-à-dire que les dimensions saillantes des deux brides dirigées vers l'intérieur respectivement sont différentes l'une de l'autre.

2. Mandrin à douille de serrage selon la revendication 1 et dans lequel le diamètre intérieur entre les brides de la paire de brides intérieures opposées l'une à l'autre sur l'écrou de fixation est plus petit que le diamètre extérieur de la bride extérieure de la douille de serrage quand l'écrou a été vissé au maximum sur le corps principal du mandrin.

3. Mandrin à douille de serrage selon la revendication 1 ou la revendication 2 et dans lequel une pellicule de céramique est formée sur les surfaces, soit de l'un ou de l'autre, soit des deux de la douille de serrage et de l'écrou de fixation.

# FIG. 1

# FIG. 2

# FIG. 3

# FIG. 4A

FIG.4B

FIG.5

FIG.6

# FIG.7

# FIG.8

# FIG.9